# EUROPÄISCHE PATENTSCHRIFT

(11) **EP 0 936 715 B1**
(45) Veröffentlichungstag und Bekanntmachung des Hinweises auf die Patenterteilung: **30.08.2006**
(21) Anmeldenummer: 98123883.5
(22) Anmeldetag: 16.12.1998
(51) Int. Cl.: H02G 15/10, H02G 15/24

(54) **Kabelmuffe**
Cable sleeve
Manchon de câble

(30) Priorität: 10.02.1998 DE 19805068
(43) Veröffentlichungstag der Anmeldung: 18.08.1999
(73) Patentinhaber: ABB PATENT GmbH, 68526 Ladenburg (DE)
(72) Erfinder: Hansen, Sigurdur A. Dipl.-Ing., 76139 Karlsruhe (DE); Körber, Franz-Josef Dipl.-Ing., 63674 Altenstadt (DE); Schwarz, Michael Dipl.-Ing, 63579 Freigericht (DE)
(74) Vertreter: Miller, Toivo

(56) Entgegenhaltungen:
- EP-A- 0 491 314
- EP-A- 0 627 800
- DE-A- 2 733 815
- DE-A- 3 822 288
- DE-C- 4 122 001

## Beschreibung

Die Erfindung betrifft eine Kabelmuffe für eine Kabelverbindung in einer Hochspannungskabelanlage.

Kabelmuffen sind an sich bekannt, siehe Prospekt der Fa. ABB Kabel und Draht GmbH (ABB Energiekabel GmbH), 68199 Mannheim, Druckschriften-Nr. KUD 1181 D 4.96/1 WDW, "VPE-isolierte Hochspannungskabel 60 kV bis 150 kV", Seite 8, Bild unten. Bei dieser Kabelmuffe befindet sich innerhalb eines mit Kabelisolieröl aufgefüllten Gehäuses ein Gießharzisolator, dessen Inneres mit einer Füllmasse gefüllt ist, und ein Leiterkabelteil mit einem vorgefertigten Feldsteuerelement, wodurch ein Kabelendverschluß gebildet wird. Dieser Kabelendverschluß ist mit einem Hochspannungskabel mit VPE-Isolierung verbunden, wogegen das ins Innere des Gehäuses hineinragende Ende mit einem Ölkabel verbunden ist. Auf diese Weise können zwei Kabel unterschiedlicher Isolierung einfach miteinander verbunden werden.

Bekannt ist auch ein Kabelendverschluß, dessen eines Ende mit einer Hochspannungskomponente in einer SF₆-gasisolierten Hochspannungsanlage verbunden ist und dadurch einen Kabelzu- oder -abgang bildet.

Eine Kobelmuffle gemäβ Oberbegriff des Anspruchs 1 ist aus DE 4122001C bekannt.

Aufgabe der Erfindung ist es, eine Kabelmuffe dieser Art soweit zu verbessern, daß zum einen die Montage vereinfacht ist und zum anderen die Gesamtlänge der Kabelmuffe reduziert werden kann.

Diese Aufgabe wird erfindungsgemäß durch die Merkmale des Anspruches 1 gelöst.

Erfindungsgemäß also besitzt die Kabelmuffe ein Rohrgehäuse, an deren einem Ende ein handelsüblicher Kabelendverschluß angebracht ist und an deren anderem Ende ein Isolierkörper für einen Kabelstecker angebracht ist, wobei die im Inneren des Gehäuses befindlichen Enden des Kabelendverschlusses und des lsolierkörpers elektrisch leitend miteinander verbunden sind.

Zum einen kann bei dieser erfindungsgemäßen Ausführung die Montage der Kabelmuffenenden vereinfacht werden. Zunächst wird, in bekannter Weise, der Kabelendverschluß mit der zugehörigen Platte montiert, an der das Rohrgehäuse befestigt werden kann. Das andere Ende des Rohrgehäuses wird danach mit der anderen Platte verschlossen, an der der Isolierkörper angebracht ist. Bei geeigneter Ausgestaltung der elektrischen Kupplung des Kabelendverschlusses mit dem Isolierkörper entsprechend Anspruch 3 erfolgt die elektrische Verbindung der beiden Komponenten mittels eines Steckvorgangs.

Bei einer besonders vorteilhaften Ausführung können das Rohrgehäuse sowie der Isolator fabrikseitig zusammenmontiert werden, so daß diese vorgefertigte Einheit einfach an dem Kabelendverschluß befestigt werden kann.

Dadurch daß die Länge des Isolierkörpers für den Kabelstecker in seiner Bauweise gering ist, kann die Gesamtlänge der Kabelmuffe gegenüber der bekannten Anordnung um ca. 20 bis 30% verkürzt werden. Dies hat auch bei einer Nachrüstung in bestehenden Muffenbauwerken mit begrenztem Platz erhebliche Vorteile.

Das Innere des Rohrgehäuses außerhalb sowohl des Kabelendverschlusses als auch des Isolierkörpers ist in bevorzugter Weise mit einem gasförmigen Isoliermittel gefüllt, welches SF₆ sein kann. Es besteht natürlich auch die Möglichkeit, flüssiges Isoliermittel einzubringen oder gegebenenfalls auch aushärtbares Isoliermaterial.

Diese und weitere vorteilhafte Ausgestaltungen der Erfindung ergeben sich aus den Unteransprüchen.

Es ist selbstverständlich, daß die Kabelmuffe einpolig oder auch dreipolig ausgebildet sein kann. In diesem einpoligen Fall befinden sich innerhalb des Rohrgehäuses ein Kabelendverschluß und ein Isolierkörper. Bei einer mehrpoligen oder mehrphasigen Ausführung sind innerhalb eines Rohrgehäuses eine der Anzahl der Phasen entsprechende Anzahl von Kabelendverschlüssen und Isolierkörpern angeordnet.

Wenn hier von "Isolierkörper" oder "Isolator" die Rede ist, dann wird immer ein "Isolierkörper für einen Kabelstecker" darunter verstanden.

Anhand der Zeichnung, in der drei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine Schnittansicht durch eine einpolige und
- Fig. 2 und 3: je eine Schnittansicht durch je eine dreipolige Kabelmuffe.

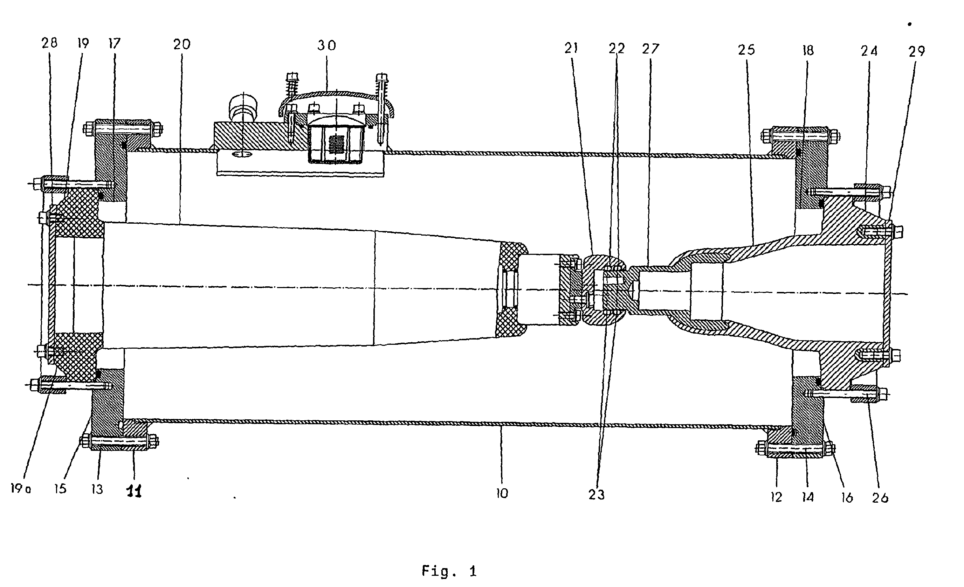

Ein zylindrisches Rohrgehäuse 10 trägt an seinen beiden Enden jeweils eine Flanschleiste 11, 12, an der mittels Schrauben 13, 14 je eine Halteplatte 15, 16 befestigt ist, die jeweils einen Durchbruch 17, 18 aufweisen. An der einen Halteplatte 15, in der Zeichnung der linken Halteplatte, ist ein Isoliergehäuse 19 eines handelsüblichen SF₆-Schaltanlageneinbauendverschlusses befestigt, dessen Innenteile in der Figur 1 nicht dargestellt sind, die aber aus dem oben erwähnten Prospekt der ABB Energiekabel GmbH, Seite 7, links, bzw. aus dem Prospekt der Fa. ABB Kabel und Draht GmbH, Mannheim, Druckschriften-Nr. K+D 1048/3D (4.88/1)04, "Niederdruckölkabel", auf Seite 6, links dargestellt ist.

Der innere Bereich 20 des Isoliergehäuse 19, der sich im Inneren des Rohrgehäuses befindet, trägt an seinem freien Ende ein zylindrisches Kontaktstück 21, dessen Innenwandungen zwei Rillen 22 aufweisen, in denen sich Vielfach-Kontaktelemente, hier Spiralfederkontakte 23 befinden.

An der anderen Verschlußplatte 16 ist der Flansch 24 eines Isolierkörpers 25 für einen Kabelstecker mittels Schraubverbindungen 26 befestigt, der ins Innere des Rohrgehäuses 10 hineinragt und an seinem inneren Ende einen Fortsatz 27 trägt, der im montierten Zustand ins Innere des Zylinderkontaktes 21 eingreift, wobei er hierin hineingesteckt werden kann.

Die Anordnung gemäß Fig. 1 ist eine transportable Einheit und ist demgemäß mittels Abdeckplatten 28 und 29 an den offenen Seiten der Isolierkörper 19/20 und 25 verschlossen.

Das Rohrgehäuse 10 besitzt außerdem eine Berstschutzeinrichtung 30.

Zur Montage der Kabelmuffe an Ort und Stelle wird zunächst der Kabelendverschluß mit dem Isoliergehäuse 19, 20 hergestellt, wie dies aus den oben erwähnten Prospekten bzw. Druckschriften ersichtlich ist. Danach bestehen mehrere Möglichkeiten:
Zum einen kann an den Flansch 19a des Isoliergehäuses 19/20 die eine Platte 15 angeschlossen werden. An der Platte 15 wird dann das Rohrgehäuse 10 mit den Schraubenverbindungen 13 befestigt. Danach wird die andere Platte 16 am Rohrgehäuse 10 mit den Schraubenverbindungen 14 festgeschraubt und schlußendlich der Isolierkörper 25 über den Flansch 24 und die Schraubenverbindungen 26 an der Platte 16 befestigt, wobei der Fortsatz 27 in das Innere des Zylinderkontaktstückes 21 hineingesteckt wird.

Bei einer weiteren Ausführungsform besteht die Möglichkeit, daß die Platte 15, das Rohrgehäuse 10 und die Platte 16 eine vormontierte Einheit bilden, und bei einer dritten Ausführungsform kann die vormontierte Einheit aus dem Rohrgehäuse 10, der Platte 16 und dem daran befestigten Isolierkörper 25 gebildet sein, die nach Montage des Kabelendverschlusses innerhalb des Isoliergehäuse 19/20 an der Platte 15 befestigt werden kann.

Man erkennt, daß der Isolierkörper 25 für einen Kabelstecker deutlich kürzer ist als der Kabelabschnitt innerhalb des mit Öl gefüllten Gehäuses der an sich bekannten Kabelmuffe.

Das Innere des Rohrgehäuses 10 wird mit SF₆-Gas als Isoliermittel gefüllt.

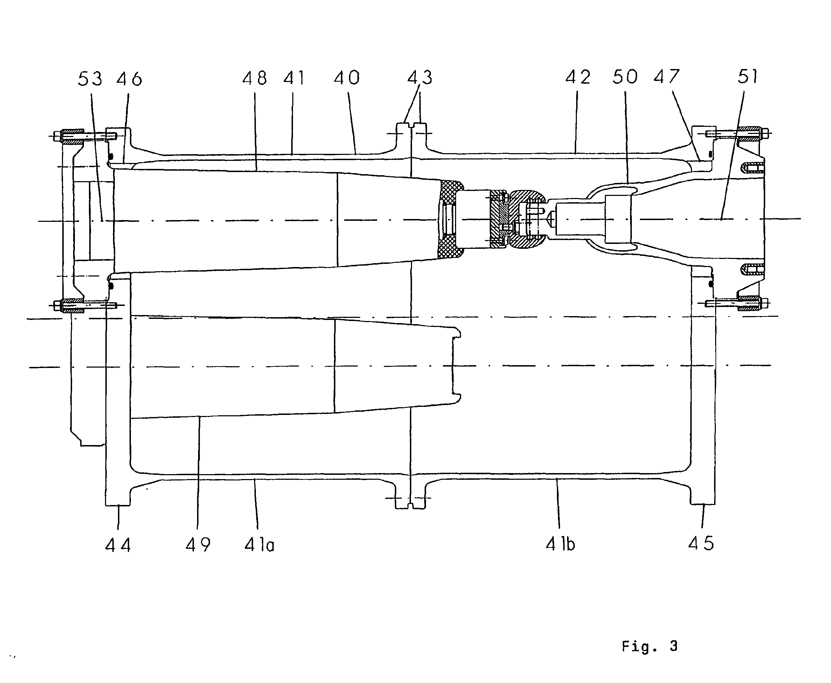

Die Fig. 3 zeigt eine erste Ausführungsform einer dreiphasigen Anordnung einer Kabelmuffe.

Die Kabelmuffe besitzt ein Rohrgehäuse 40, welches aus zwei topfförmig ausgebildeten Gehäuseteilen 41 und 42 mittels einer Flanschverbindung 43 zusammengesetzt ist. Der Topfboden 44 bzw. 45 der beiden Gehäuseteile 41 und 42 ist einstükkig mit den Rohrabschnitten 41 a und 41 b verbunden. Die Topfböden 44 und 45 besitzen eine der Anzahl der Phasen entsprechende Anzahl von Durchbrüchen 46 und 47. In die Durchbrüche 46 sind drei Kabelendverschlüsse 48 und 49 eingesetzt (in Fig. 3 ist der dritte Kabelendverschluß nicht dargestellt), wobei die Befestigung des Kabelendverschlusses 48 bzw. 49 an dem Topfboden 44 in der gleichen Weise vorgenommen wird wie die Befestigung des Kabelendverschlusses mit dem Isoliergehäuse 19/20 an der Platte 15 der Ausführung nach Fig. 1.

Durch die Durchbrüche 47 des anderen Topfbodens 45 sind Isolierkörper 50 eines Kabelsteckers eingefügt, die dem Isolierkörper 25 der Fig. 1 entsprechen bzw. gleichen. Die elektrisch leitende Verbindung des Isolierkörpers 50 mit dem Kabelendverschluß 48 erfolgt in der gleichen Weise wie die elektrisch leitende Verbindung der entsprechenden Teile der Fig. 1.

In dem Isolierkörper 50 ist ein Kabelstecker 51 eingesteckt gezeichnet; dieser Kabelstecker wird natürlich auch in den Isolierkörper 25 bei der Ausführung nach Fig. 1 eingesteckt. In gleicher Weise ist der Kabelendverschluß mit dem Isoliergehäuse 19/20 so ausgebildet, wie in der Fig. 3 dargestellt. In das Isoliergehäuse wird in einer Weise, wie sie in oben genannten Druckschriften beschrieben ist, eine entsprechende Kabelanordnung 52 eingefügt.

In der Fig. 3 ist gezeigt, daß das Gehäuse 40 aus zwei Gehäuseteilen 41 und 42 zusammengesetzt ist. Es besteht natürlich auch die Möglichkeit, das Gehäuse 40 so auszubilden wie das Rohrgehäuse 10. Unterschiedlich ist dabei, daß die Topfböden 44 und 45 mit den drei Durchbrüchen 46 und 47 durch eine Platte gebildet sind, die in der gleichen Weise wie die Platten 15, 16 mittels der Flanschringe 11, 12 an dem einstückigen Rohrgehäuse 40 montiert sind. Die Vorteile, die bei der einpoligen Ausgestaltung gemäß Fig. 1 gegeben sind, sind auch bei der dreipoligen Ausführung gemäß Fig. 3 vorhanden: Die Montage der Anordnung ist einfach und die Länge der Kabelmuffe ist bei der dreipoligen Ausführung ebenfalls um 25% gegenüber der bekannten Anordnung reduziert.

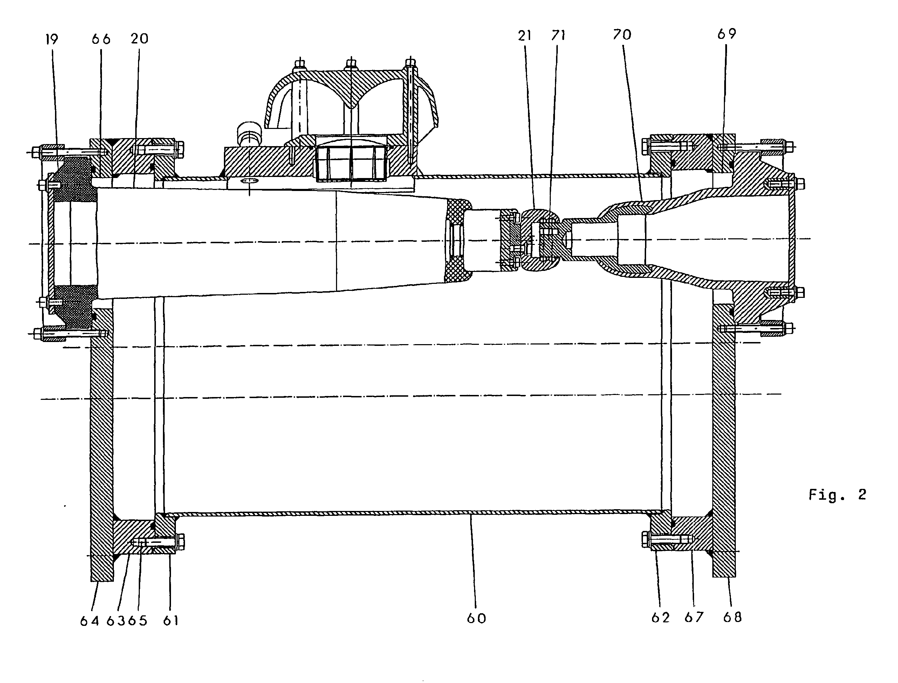

Die Fig. 2 zeigt eine weitere Ausführungsform einer erfindungsgemäßen Kabelmuffe ähnlich der der Fig. 1, nur in dreipoliger Ausführung.

Ein Rohrgehäuse 60 ist an seinen beiden Enden mit einer Flanschleiste 61, 62 versehen. An der Flanschleiste 61 ist unter Zwischenfügung eines Ringzylinders 63 eine Abdeckplatte 64 mittels Schraubenverbindungen 65 befestigt, welche Abdeckplatte 64 eine der Anzahl der Phasen entsprechende Anzahl von Durchbrüchen 66 aufweist, durch die je ein Kabelendverschluß 19, 20 hindurchgeführt ist; der Kabelendverschluß besitzt in der Fig. 3 das Bezugszeichen 48 bzw. 49.

Das freie Ende jedes Kabelendverschlusses 19/20 ist, in gleicher Weise wie bei der Ausführung gemäß Fig. 1 mit dem zylindrischen Kontaktstück 21 versehen, welches in der gleichen Weise ausgebildet ist, wie dasjenige der Fig. 1 bzw. der Fig. 3.

An der Flanschleiste 62 ist, ebenfalls unter Zwischenfügung einer zylindrischen Leiste 67 eine Abdeckplatte 68 befestigt, die ebenfalls eine der Anzahl der Phasen entsprechende Anzahl von Durchbrüchen 69 besitzt, die von dem Isoliergehäuse 70 durchgriffen ist, welches Isoliergehäuse an der Außenseite der Abdeckplatte 68 befestigt ist. Das Isoliergehäuse 70 entspricht dem Isoliergehäuse 25 der Fig. 1 und besitzt an seinem inneren Ende einen zylindrischen Fortsatz 71, der wie der zylindrische Fortsatz 27 ins Innere des zylindrischen Kontaktstückes eingreift.

In gleicher Weise wie bei der Ausführung gemäß den Figuren 1 und 3 ist das Innere des Rohrgehäuses 60 mit Isoliergas gefüllt und die Vorteile der einphasig gekapselten Anordnung sind auch bei der dreiphasig gekapselten Anordnung vorhanden: Die erheblich vereinfachte Montageweise und eine deutlich verkürzte Bauform, die gegenüber den bekannten Anordnungen um ca. 25 % verkürzt ist.

## Patentansprüche

1. Ein- oder mehrpolige Kabelmuffe für eine Kabelverbindung in einer Hochspannungsanlage, mit einem an beiden Enden mittels je einer Platte (15, 16, 64, 68) gasdicht abgeschlossenen Rohrgehäuse (10, 40, 60), **dadurch gekennzeichnet, daß** sie, mit einer der Anzahl der Phasen entsprechenden Anzahl von handelsüblichen Kabelendverschlüssen (20, 48, 49) versehen ist die an einer der Platten (15,64) befestigt ins Rohrinnere ragen und mit einer der Anzahl der Phasen entsprechenden Anzahl von Isolatoren (25, 50, 70) für Kabelstecker (51), die an der anderen Platte (16, 68) befestigt zum inneren Ende jedes Kabelendverschlusses (20, 48, 49) vorspringen, wobei das Innere Ende jedes Kabelendverschlusse (20, 48, 49) mit dem inneren Ende jedes Isolators (25, 50,70) elektrisch leitend verbunden ist und wobei nach Montage des Kabelendverschlusses (20, 48, 49) das Rohrgehäuse (10, 40, 60) und der Isolator (25, 40, 70) mit der den Kabelendverschluß (20, 48, 49) tragenden Platte (15, 64) verbindbar sind.

2. Kabelmuffe nach Anspruch 1, **dadurch gekennzeichnet, daß** das Rohrgehäuse (10, 40, 60) und die Isolatoren (25, 50, 70) des Kabelsteckers (51) als vormontierbare Einheit mit den Kabelendverschlüssen (20, 48, 49) verbindbar sind.

3. Kabelmuffe nach Anspruch 2, **dadurch gekennzeichnet, daß** das innere Ende jedes Kabelendverschlusses (20, 48, 49) mit einem Buchsenzylinder (21) und das innere Ende jedes Isolierkörpers mit einem zylindrischen Fortsatz (27) versehen ist, wobei letztere in den Buchsenzylinder (21) einsteckbar und mit diesem über Vielfachkontaktelemente elektrisch leitend kontaktierbar ist.

4. Kabelmuffe nach einem der vorherigen Ansprüche, **dadurch gekennzeichnet, daß** das Innere des Rohrgehäuse (10, 40, 60) mit gasförmigem oder flüssigem oder aushärtbarem Isoliermittel befüllbar ist.

5. Kabelmuffe nach Anspruch 4, **dadurch gekennzeichnet, daß** das gasförmige Isoliermittel SF₆-Gas ist.

6. Kabelmuffe nach einem der vorherigen Ansprüche, **dadurch gekennzeichnet, daß** das Rohrgehäuse (10, 40, 60) einstückig ist und an seinen beiden eine Flanschleiste (11, 12, 61, 62) trägt, an der die Abschlußplatten befestigbar sind.

7. Kabelmuffe nach einem der Ansprüche 1 bis 5, **dadurch gekennzeichnet, daß** das Rohrgehäuse (40) zweigeteilt ist und die beiden Rohrgehäuseteile (41a, 41b) topfförmig ausgebildet sind, und daß die Topfböden der beiden Rohrgehäuseteile (41a, 41b) eine der Anzahl der Phasen entsprechende Anzahl von Durchbrüchen aufweisen, in die jeweils ein Kabelendverschluß (20, 48, 49) bzw. Isolierkörper (25, 50, 70) einfügbar und daran befestigbar sind.

8. Kabelmuffe nach einem der vorherigen Ansprüche, **dadurch gekennzeichnet, daß** die Länge der Kabelmuffe um 20 bis 30% gegenüber bekannten Kabelmuffen verkürzt ist.

## Claims

1. Single-pole or multiple-pole cable joint for a cable connection in a high-voltage installation, having a tubular housing (10, 40, 60), which is closed at both ends by means of in each case one plate (15, 16, 64, 68), **characterized in that** the cable joint is provided with a number of commercially available cable end terminations (20, 48, 49) corresponding to the number of phases, which project into the tube interior, mounted on one of the plates (15, 64) and having a number of insulators (25, 50, 70) corresponding to the number of phases for cable plugs (51) which, mounted on the other plate (16, 68), project to the inner end of each cable end termination (20, 48, 49), with the inner end of each cable end termination (20, 48,49) being electrically conductively connected to the inner end of each insulator (25, 50, 70), and in which case the tubular housing (10, 40, 60) and the insulator (25, 50, 70) with the plate (15, 64) to which the cable end termination (20, 48, 49) is fitted can be connected after fitting of the cable end termination (20, 48, 49).

2. Cable joint according to Claim 1, **characterized in that** the tubular housing (10, 40, 60) and the insulators (25, 50, 70) of the cable plug (51) can be connected to the cable end terminations (20, 48, 49) as a unit which can be assembled in advance.

3. Cable joint according to Claim 2, **characterized in that** the inner end of each cable end termination (20, 48, 49) is provided with a socket cylinder (21), and the inner end of each insulating body is provided with a cylindrical projection (27), in which case the latter can be inserted into the socket cylinder (21) and can make electrically conductive contact with it via multiple contact elements.

4. Cable joint according to one of the preceding claims, **characterized in that** the interior of the tubular housing (10, 40, 60) can be filled with gaseous or liquid or curable insulating means.

5. Cable joint according to Claim 4, **characterized in that** the gaseous insulating means is SF₆ gas.

6. Cable joint according to one of the preceding claims, **characterized in that** the tubular housing (10, 40, 60) is integral and is fitted at its two a flanged strip (11, 12, 61, 62), to which the terminating plates can be attached.

7. Cable joint according to one of Claims 1 to 5, **characterized in that** the tubular housing (40) is split in two, and the two tubular housing parts (41a, 41b) are in the form of pots, and **in that** the pot bases of the two tubular housing parts (41a, 41b) have a number of apertures corresponding to the number of phases, into each of which one cable end termination (20, 48, 49) and/or insulating body (25, 50, 70) can be inserted and can be attached thereon.

8. Cable joint according to one of the preceding claims, **characterized in that** the length of the cable joint is 20 to 30% shorter than that of known cable joints.

## Revendications

1. Manchon de câble unipolaire ou multipolaire pour une liaison de câbles dans une installation à haute tension, avec un boîtier tubulaire (10, 40, 60) fermé de manière étanche aux gaz à chacune de ses deux extrémités au moyen d'une plaque (15, 16, 64; 68), **caractérisé en ce qu'**il est muni de boîtes d'extrémité de câbles du commerce (20, 48, 49) dont le nombre correspond au nombre de phases et qui pénètrent à l'intérieur du tube en étant fixées à une des plaques (15, 64), et avec, pour des fiches de câbles (51), des isolateurs (25, 50, 70) dont le nombre correspond au nombre de phases et qui font saillie vers l'extrémité intérieure de chaque boîte d'extrémité de câble (20, 48, 49) en étant fixés à l'autre plaque (16, 68), l'extrémité intérieure de chaque boîte d'extrémité de câble (20, 48, 49) étant reliée de manière électriquement conductrice à l'extrémité intérieure de chaque isolateur (25, 50, 70), et le boîtier tubulaire (10, 40, 60) et l'isolateur (25, 50, 70) pouvant être reliés, après montage de la boîte d'extrémité de câble (20, 48, 49), à la plaque (15, 64) portant la boîte d'extrémité de câble (20, 48, 49).

2. Manchon de câble selon la revendication 1, **caractérisé en ce que** le boîtier tubulaire (10, 40, 60), et les isolateurs (25, 50, 70) de la fiche de câble (51) peuvent être reliés aux boîtes d'extrémité de câbles (20, 48, 49) sous la forme d'un ensemble prénlonté.

3. Manchon de câble selon la revendication 2, **caractérisé en ce que** l'extrémité intérieure de chaque boîte d'extrémité de câble (20, 48, 49) est munie d'un connecteur femelle cylindrique (21) et l'extrémité intérieure de chaque corps isolant est munie d'un appendice cylindrique (27), ce dernier pouvant être inséré dans le connecteur femelle cylindrique (21) et établir avec celui-ci un contact électriquement conducteur par l'intermédiaire d'éléments à contacts multiples.

4. Manchon de câble selon une des revendications précédentes, **caractérisé en ce que** l'intérieur du boîtier tubulaire (10, 40, 60) peut être rempli d'agent isolant gazeux.ou liquide ou durcissable.

5. Manchon de câble selon la revendication 4, **caractérisé en ce que** l'agent isolant gazeux est du gaz SF₆.

6. Manchon de câble selon une des revendications précédentes, **caractérisé en ce que** le boîtier tubulaire (10, 40, 60) est d'un seul tenant et porte à ses deux extrémités un rebord formant bride (11, 12, 61, 62) auquel les plaques de fermeture peuvent être fixées.

7. Manchon de câble selon une des revendications 1 à 5, **caractérisé en ce que** le boîtier tubulaire (40) est divisé en deux et les deux parties de boîtier tubulaire (41a, 41b) sont conformées en pot, et **en ce que** les fonds de pots des deux parties de boîtier tubulaire (41a, 41b) comportent des passages dont le nombre correspond au nombre de phases et dans chacun desquels peuvent être introduits et fixés une boîte d'extrémité de câble (20, 48, 49), respectivement un corps isolant (25, 50, 70).

8. Manchon de câble selon une des revendications précédentes, **caractérisé en ce que** la longueur du manchon de câble est réduite de 20 à 30 % par rapport aux manchons de câbles connus.
